# EUROPEAN PATENT APPLICATION

(11) **EP 1 161 112 A1**
(43) Date of publication of application: **05.12.2001**
(21) Application number: 01304478.9
(22) Date of filing: 22.05.2001
(51) Int. Cl.: H04Q 7/38

(54) **Adaptive forward link scheduling by inter-cell mutual monitoring**

(30) Priority: 01.06.2000 US 584404
(71) Applicant: LUCENT TECHNOLOGIES INC., Murray Hill, New Jersey 07974-0636 (US)
(72) Inventor: Rudrapatna, Ashok, Basking Ridge, NJ 07982 (US); Zeger, Linda Marlene, New Providence, NJ 07974 (US)
(74) Representative: Buckley, Christopher Simon Thirsk

(57) **Abstract**

A method is provided for conserving the power resources, and hence increasing the overall throughput of a base station in a cellular telecommunications system. Received signal strengths of neighboring base stations are compared to reference signal strengths. Power may be conserved by scheduling transmissions to high data rate mobile stations when the received signal strength is less than the reference strength.

## Description

### BACKGROUND OF THE INVENTION

### Field of the Invention

This invention relates to a cellular communication system. More particularly, the present invention relates to a method for dynamically conserving the power of a base station based on monitoring potentially interfering traffic of neighboring base stations and scheduling high data rate transmissions accordingly.

### Description of the Related Art

In cellular communications systems, a geographic area in which cellular communications is desired is divided into smaller areas, called cells. These cells are generally circular in nature, but are represented by hexagons for graphic convenience. More or less centrally placed within each cell is a base station. Mobile stations located within a cell, such as car phones or pocket cellular phones, communicate via radio links with the base station of the cell. That cell's base station may, in turn, connect indirectly to other base stations in the cellular communications system, and to one or more wired telecommunication networks. Thus, the mobile station accesses other fixed or mobile stations through links established in the greater communications system, starting with the base station of the cell within which it is located. When a mobile station crosses a boundary from one cell to a neighboring cell, its radio links are transferred to the adjacent cell in a handoff maneuver.

For reliable communication, it is essential that the link between the mobile system and base station be strong. One requirement for a strong link between the mobile station and a base station is that a strong signal be received at the mobile station. A measure of the strength of a received signal is the degree to which it exceeds the level of interfering signals at the receiver. For good reception at the mobile station, the ratio of received signal to interference must be above a threshold level.

In Code Division Multiple Access (CDMA) cellular systems, other channels appear to a given user's channel as noise-like interference. On the forward link much of the interference to mobiles comes from neighboring base stations transmitting to other mobiles. This interfering traffic is overcome by several means. First, the base station's total power is divided among the users so that each user receives enough power, via power control, so that its signal to interference ratio is large enough to guarantee the desired frame error rate (FER). Power control is used to avoid transmitting more power than necessary to maintain the desired frame error rate. Secondly, the number of simultaneous users allowed access in a sector is limited such that each mobile can be allocated enough base station power to achieve the desired frame error rate. When there is not enough base station power available to accommodate the existing user plus a new user, the system is in 'power overload' and new users are blocked for the duration of the overload.

Currently, service is provided to each user as it is demanded, as long as the FER can be met. Under this method, mobiles may be served at times at which they require more power than they would at other times. For example, if a mobile happens to request service when the interference from neighboring base stations is at its maximum, that mobile will require more power than it would at other times. This method, which uses power resources rather inefficiently, was suited for delay intolerant traffic such as voice, and proved adequate for voice traffic, which has a much lower rate than the high data rate traffic of third generation cellular systems. In order for third and subsequent generation cellular systems to adequately serve multiple users with high data rates, an efficient method is needed to conserve power resources when scheduling data users.

### SUMMARY OF THE INVENTION

The present invention provides a scheduling method which conserves the power resources of each base station in a cellular system, thereby providing larger throughputs to mobiles, and/or serving more simultaneous mobiles. The controller determines the strength of the signal it receives from the transmitters of the neighboring stations providing the most interference to the mobile station. The controller then compares the strength of the received signal from the neighboring stations' transmitters to a reference signal strength of the neighboring stations. Power consumed by the base station's transmitter is conserved when the controller adjusts the schedule of the transmission of digital data to the mobile station to take advantage of periods of low signal strength from the neighboring stations' transmitters. Variations in neighboring base station transmit power with time are likely to be greater in third generation systems than in second generation systems, due to the bursty nature of internet traffic.

The advantages and features of the invention will be more readily understood from the following detailed description of the invention which is provided in connection with the accompanying drawings.

### BRIEF DESCRIPTION OF THE DRAWINGS

FIGURE 1 is a schematic representation of a cellular communications system.
FIGURE 2 is a schematic block diagram of a base station in the cellular communications system of FIG. 1.
FIGURE 3 is a flow chart of a power conserving scheduling method.

### DETAILED DESCRIPTION OF PREFERRED EMBODIMENTS

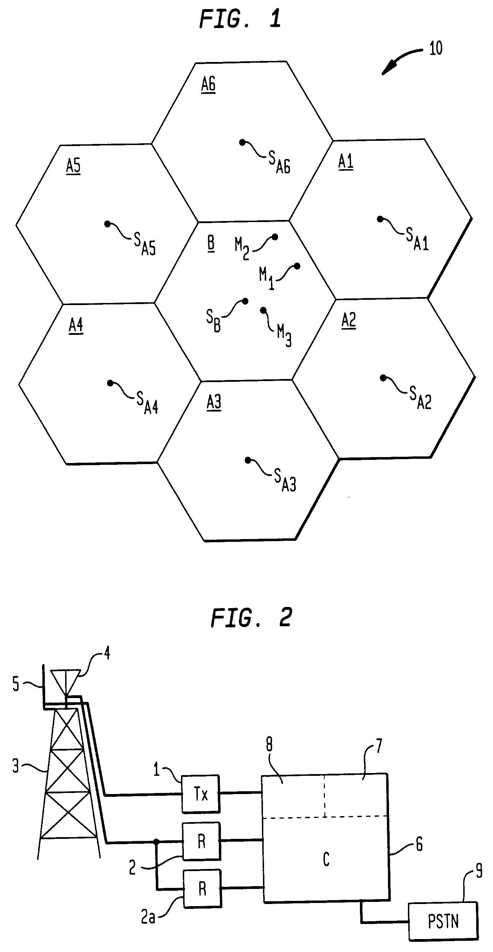

Referring to FIG. 1, a portion of a cellular communications system 10 is illustrated. Seven cells are depicted. Cell B includes a base station S_{B}. Cell B is surrounded by adjacent cells A1 through A6, each of which has a base station S_{A1} through S_{A6}. Referring to FIG. 2, each base station consists of a transmitter 1 for transmitting telecommunication signals to mobile stations within the cell, and a receiver 2 for receiving telecommunication signals from mobile stations within the cell. A tower 3 supports antenna 4 connected to receiver 2 (for receiving mobile station transmissions) and receiver 2a (for receiving base station transmissions) and an antenna 5 connected to the transmitter 1.

The transmitter 1 and receiver 2 are connected to a controller 6. The controller 6 includes a processor 7 and a memory 8. The memory 8 includes such software as is needed for the controller 6 to control the telecommunications operations of the base station. The controller 6 may also be connected by wire to a public switched telephone network (PSTN) 9. The controller 6 controls the radio linkage established with mobile stations and the links established with the PSTN 9 in order to effect telecommunication between mobile stations and other parties.

The controller 6 identifies the mobile stations' locations, in order to determine which ones may be subject to high interference from neighboring base stations. Next, the controller 6 identifies the mobile stations requiring high transmitter signal strength that are receiving digital data. Hardware and software to accomplish these identifications may be part of the existing package by which base stations accept, process, and transfer links to mobile stations. The controller 6 also determines the location of mobile stations near a cell or sector border. Determination of the location of mobile stations may be accomplished by the hardware and software used to comply with United States Federal Communications Commission geolocation regulations requiring cellular systems to identify the location of mobile stations making 911 emergency calls. Examples of geolocation technology are set forth in United States Patent Applications Serial Numbers 08/927,432, filed , and 08/927,434, filed , the entire disclosures of which are incorporated herein by reference.

Next, the controller 6 identifies neighboring base stations that can potentially interfere with the mobile station near a cell or sector border. For the mobile station near a cell or sector border, the base stations of the one or more cells near the mobile station generally will be the potentially interfering stations. Set-up is the testing and formatting required to integrate a base station in a cellular communication system. Depending on geography, traffic and experience, the controller 6 can be programmed to monitor and identify other sets of interfering base stations, as will be appreciated by those skilled in the art. For instance, all of the adjacent cells could be monitored for a mobile station near a cell or sector border, or cells outside those immediately adjacent to the cell of the controller could be monitored.

Next, the controller 6 monitors the interference being created by the identified neighboring cell base stations and determines the level of the potentially interfering traffic. The controller 6 does this by determining the strength of the overall signal received by the base station S_{B} from each of the identified neighboring base stations. This received signal strength is used to approximate the potentially interfering transmission at the mobile station. If base station S_{B} receives low interference from nearby base stations relative to the reference level, it is an indication that the mobile station is also receiving low interference, and the controller 6 will be able to schedule transmission of a high data rate signal to the mobile station during this period of low power requirement. Likewise, if the overall strength of the signal received at the base station S_{B} increases, this indicates an increasing likelihood of interference at the mobile station and the controller 6 will delay transmission of a high data rate signal to the mobile station during this period of high power requirement. The received interference is continually monitored resulting in intermittent transmission of the high data rate signal to the mobile station. It is a characteristic of high data rate communications that they can often accept intermittent transmission without affecting the integrity of the data being transmitted, as long as the delays between transmissions are not too long. Thus, power is conserved by scheduling high data rate transmissions to mobile stations for periods when there is reduced potential interference and the transmission can be made at a lower signal strength.

Whether there has been a reduction (or increase) in the strength of the signal received from the identified neighboring base stations is determined by comparing the signal being received at the base station from the identified neighboring station at any instant to a reference signal strength. The reference signal strength can be the maximum signal normally received from the identified neighboring station according to the record of the historical signal strength of the neighboring stations kept by the base station S_{B}. Alternatively, the relative signal strength may be compared to baseline minimum and maximum signals received from the neighboring station during the initial set-up of the base station when the stations were activated. Minimum signal strength consists of the neighboring station's overhead channels including pilot, paging, etc., as known in the art.

The controller 6 uses the reduction (or increase) in the signal strength received from the neighboring station to approximate the actual change in interference that a particular mobile station experiences. It is the relative change in an interfering station's power that is relevant. In effect, if the base station S_{B} is able to detect a change in the interference it receives from a neighboring station by a factor of F, then the mobile station is also likely to have its interference from the neighboring station change by a factor of F. When the change in interference at the mobile station occurs at a factor of F, the schedules of transmissions by the base station to the mobile station may be adjusted as set forth above.

Using the change in transmission signal strength from neighboring cell base stations as an analogue for change in interference traffic at the mobile station, the controller schedules high data rate transmissions for the periods of lowest neighboring base station signal strength. By limiting high data rate transmissions to mobile stations within its cell in this manner, the base station may reduce its power consumption.

Potentially interfering base stations may be continuously monitored and the schedule of signal transmission to the mobile station may be continuously adjusted accordingly. Subsequent adjustment can be made based on a continued comparison of the received signal strength to the reference signal strength. Alternatively, subsequent adjustment can be made based on a continuous comparison of incremental changes in the received signal's strength.

An oversubscribed base station could further conserve power by executing a soft handoff of a mobile station near a cell or sector border to an adjacent, lightly loaded cell base station. Under this alternative, the base station S_{B} will identify power-demanding mobile stations and adjacent base stations transmitting at less than normal strength as set forth above. When the base station power demands are above a threshold, the base station can further reduce its power requirement by implementing a soft handoff to the underutilized adjacent station. In a soft-handoff, radio links are established between a second base station and a mobile station while radio links are maintained between a first base station and the mobile station. In this manner, the signal strength necessary to preserve an adequate signal to interference ratio to a mobile station can be reduced because the neighboring station supplies a signal.

In another alternative embodiment of the invention, throughput to high data rate mobile stations may be augmented when the base station S_{B} experiences a drop in the strength of the signal from a neighboring station. Under this embodiment, when a drop in the neighboring station's (e.g., S_{A1}) transmitted signal is perceived, the strength of the signal transmitted to the mobile station (e.g., M₁) by the base station S_{B} may be increased for a short period. Because the neighboring cell A₁ is lightly loaded, this power increase will not degrade performance to mobile users (not shown) being served by the neighboring station S_{A1}.

An example now will be presented to illustrate the operation of the preferred embodiments. The controller 6 identifies cell A₁ as the cell nearest M₁. During and throughout this process, the base station S_{B} monitors the received power of the neighboring cell's base station S_{A1}, compares the received power to the baseline maximum power of station S_{A1}, and determines the power factor F₁. If the power factor F₁ is low, the controller 6 will then direct the transmitter 1 of base station S_{B} to give high priority to mobile station M₁. If the power factor F₁ is high, the controller 6 will then direct the transmitter 1 of base station S_{B} to give low priority to mobile station M₁. In this example, as well as the next few examples that follow, interference from the base stations nearest the mobile is monitored. As will be appreciated by those skilled in the art, the invention can also be practiced by monitoring base stations causing the most interference at the mobile to accommodate, for instance, log-normal shadowing and terrain.

For a high data rate mobile station M₂, located near two adjacent cells A₁ and A₆, a similar transmission schedule may be undertaken, except that the controller 6 will identify these two cells, A₁ and A₆, as the cells nearest mobile station M₂. Therefore, the controller 6 will monitor both corresponding base stations S_{A1} and S_{A6}, and schedule its transmitted signals according to the strength of the aggregate signal from those base stations S_{A1} and S_{A6}. As discussed above, the controller 6 could be programmed to monitor more neighboring base stations as appropriate.

As set forth above, the signal strength transmitted to mobile stations near cell or sector borders may be increased by a factor derived from monitoring the base stations that are near those mobile stations. High data rate mobile stations that are located near the base station to which they are linked may need to be treated differently because they essentially will be equidistant from six neighboring base stations. For instance, for high data rate mobile station M₃, located near base station S_{B}, the controller 6 of base station S_{B} will identify cells A₁ through A₆ as potentially interfering stations. The controller 6 will monitor all of the base stations of these cells (A₁ through A₆), and will schedule signal transmission to mobile station M₃ according to the strength of the aggregate signal of base stations A₁ through A₆ in relation to the historic record of these stations.

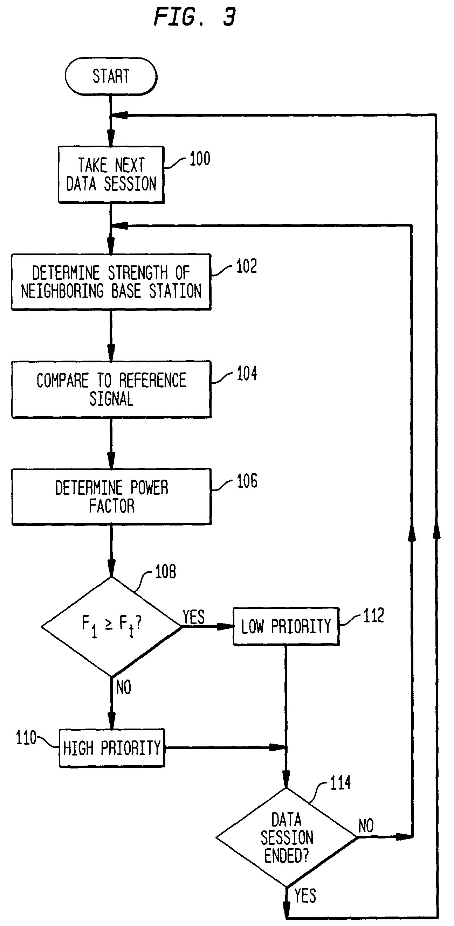

The operation of the present invention can be further explained in connection with the flow chart of FIG. 3. Referring now to FIG. 3, a simplified flow-rchart illustrates the practice of a preferred embodiment of the present invention. The present invention should not be limited, however, to the specific embodiments described and illustrated in detail herein.

In step 100, each data session received from a mobile station by the central base station S_{B} is examined as a candidate for a signal scheduling arrangement. At step 102, the strength of the received signal from the neighboring stations is determined. This received signal strength is compared to the reference signal strength from the identified neighboring stations based on the record of transmissions of the neighboring stations (step 104). At step 106, the instant power factor F₁ is determined based on the strength of the received signal from the neighboring stations. At step 108, the power factor F₁ determined in step 106 is compared to a delay threshold Fₜ. If the power factor F₁ is less than the delay threshold Fₜ, the high data rate signal to the mobile station is given high priority at step 110. If the adjustment factor is greater than the delay threshold, the high data rate transmission is given low priority at step 112.

The ongoing status of the communication between the mobile station and the base station is monitored at step 114. If the connection is being maintained, the program returns to step 102 and the signal scheduling method is repeated. If it is determined that the call has ended, then the next data session received from a mobile station is examined at step 100.

The invention provides a method and apparatus for conserving the power of base stations in cellular communication systems, and hence increasing system throughput. Variations of the disclosed embodiments will be apparent to those skilled in the art. Accordingly, it is to be understood that although the present invention has been described with reference to exemplary embodiments, various modifications may be made without departing from the spirit or scope of the invention which is defined by the claims appended hereto.

## Claims

1. A method of operating a cellular system, said method comprising:
determining the strength of a received interference signal from a neighboring base station;
comparing the strength of the received interference signal to a reference signal strength; and
subsequently, adjusting the schedule of a transmission from a base station to a mobile station.

2. The method of claim 1, wherein the schedule of the transmission from said base station to the mobile station is adjusted in relation to received interference signals from a plurality of neighboring base stations.

3. A method of operating a base station of a cellular system, said method comprising:
determining the strength of a received interference signal from a neighboring base station;
comparing the strength of the received interference signal to a reference signal strength; and
adjusting the schedule of a transmission from said base station to a mobile station.

4. The method of claim 1 or 3, wherein said transmission from said base station is transmitted in relation to the reduction in strength of said received interference signal compared to said reference signal strength.

5. The method of claim 1 or 3, wherein said transmission from said base station is delayed in relation to the increase in strength of said received interference signal compared to said reference signal strength.

6. The method of claim 1 or 3, wherein said reference signal strength corresponds to the maximum signal recorded for said neighboring base station.

7. The method of claim 1 or 3, wherein said reference signal strength is the maximum signal recorded during the set-up of said neighboring base station.

8. The method of claim 1 or 3, wherein said reference signal strength is recorded during a previous transmission of said neighboring base station.

9. The method of claim 3, wherein the transmission from said base station to the mobile station is adjusted in relation to received signals from a plurality of neighboring base stations.

10. The method of claim 3, further comprising the step of executing a soft handoff of the mobile station.

11. A cellular base station controller, said controller comprising:
a receiver for receiving an interference signal from a neighboring base station; and
a transmitter for transmitting data to a mobile station in relation to the strength of said neighboring base station signal.

12. The controller of claim 11, wherein a transmission schedule is controlled in relation to said received interference signal.

13. The controller of claim 11, wherein the transmitter is configured to transmit said transmission from said base station in relation to a reduction in strength of said received interference signal compared to a reference signal.

14. The controller of claim 11, wherein the transmitter is configured to delay said transmission from said base station in relation to an increase in strength of said received interference signal compared to a reference signal.

15. The controller of claim 11, wherein the transmitter is configured to adjust the schedule of a transmission from said base station to the mobile station in relation to the change of received interference signals from a plurality of neighboring base stations compared to reference signals of a plurality of neighboring base stations.

16. The controller of claim 12, wherein said controller is configured to further execute a soft handoff to the mobile station to the neighboring base station.

17. A data communications system, comprising:
means for determining the strength of an aggregate received interference signal received at the base station from base stations adjacent said base station;
means for comparing the received interference signal to a reference; and
means for adjusting the schedule of a transmission from said base station to a mobile station.

18. The controller of claim 12 or the system of claim 17, wherein said reference signal is a maximum signal based on the historic record of transmission of, as the case may be, said neighboring base station or said adjacent base stations.

19. The controller of claim 12 or the system of claim 17, wherein said reference signal is the maximum signal recorded during the set-up of, as the case may be, said neighboring base station or said adjacent base stations.

20. The controller of claim 12 or the system of claim 17, wherein said reference signal is a signal strength recorded during a previous transmission of, as the case may be, said neighboring base station or said adjacent base stations.
